# EUROPÄISCHE PATENTSCHRIFT

(11) **EP 0 929 558 B1**
(45) Veröffentlichungstag und Bekanntmachung des Hinweises auf die Patenterteilung: **10.01.2001**
(21) Anmeldenummer: 97910341.3
(22) Anmeldetag: 24.09.1997
(51) Int. Cl.: C07F 9/28, H01M 10/08, C07F 9/535

(54) **LITHIUMFLUORPHOSPHATE SOWIE DEREN VERWENDUNG ALS LEITSALZE**
LITHIUM FLUOROPHOSPHATES AND THEIR USE AS CONDUCTING SALTS
FLUOROPHOSPHATES DE LITHIUM ET LEUR UTILISATION COMME SELS CONDUCTEURS

(30) Priorität: 05.10.1996 DE 19641138
(43) Veröffentlichungstag der Anmeldung: 21.07.1999
(73) Patentinhaber: MERCK PATENT GmbH, 64293 Darmstadt (DE)
(72) Erfinder: SARTORI, Peter, D-47495 Rheinberg (DE); IGNAZIEV, Nikolai, D-47058 Duisburg (DE)
(86) Internationale Anmeldenummer: EP9705230
(87) Internationale Veröffentlichungsnummer: WO9815562

(56) Entgegenhaltungen:
- WO-A-88/03331
- WO-A-94/27335
- US-A- 4 900 854
- N. V. PAVLENKO: "Reaction of tris(perfluoroalkyl)phosphine oxides and tris(perfluoroalkyl)difluorophosphoranes with fluoride ion" JOURNAL OF GENERAL CHEMISTRY USSR., Bd. 59, Nr. 3, - 20.August 1989 NEW YORK US, Seiten 469-473, XP002053432
- E. L. MUETTERTIES: "Five-coordinate stereochemistry" INORGANIC CHEMISTRY., Bd. 3, Nr. 9, 1964, EASTON US, Seiten 1298-1303, XP002053433
- HEINZ OBERHAMMER: "Molecular structures of phosphorus compounds.10." INORGANIC CHEMISTRY., Bd. 21, Nr. 1, 1982, EASTON US, Seiten 275-281, XP002053434

## Beschreibung

Die Erfindung betrifft neue Lithiumfluorphosphaten der allgemeinen Formel

Li⁺[PFₐ(CH_{b}F_{c}(CF₃)_{d})ₑ]⁻, (I)

worin
- a: 1, 2, 3, 4 oder 5,
- b: 0 oder 1
- c: 0, 1, 2 oder 3,
- d: 0, 1, 2 oder 3 und
- e: 1, 2, 3 oder 4
bedeuten, mit der Bedingung, daß die Summe a + e gleich 6 , die Summe b + c + d gleich 3 ist und b und c nicht gleichzeitig 0 bedeuten, unter der Voraussetzung daß die Liganden (CH_{b}F_{c}(CF₃)_{d}) unterschiedlich sein können,
ein Verfahren zur Herstellung dieser Verbindungen ,
deren Verwendung in Elektrolyten,
sowie mit diesen Elektrolyten hergestellte Lithiumbatterien.

Verbindungen der allgemeinen Formel

[PFₐ(CH_{b}F_{c}(CF₃)_{d})ₑ] (Ia),

worin, wie in Formel (I)
- b: 0 oder 1
- c: 0, 1, 2 oder 3,
- d: 0, 1, 2 oder 3 und
- e: 1 , 2, 3 oder 4,
jedoch
- a: 1, 2, 3 oder 4
bedeuten,
werden als Zwischenprodukte zur Herstellung von Verbindungen der Formel (I) benötigt.

Üblicherweise wird in Lithium-Sekundärbatterien Lithiumhexafluorphosphat als Leitsalz verwendet. Nachteilig ist, daß dieses Salz relativ wenig hydrolysestabil ist. Es wurden daher verschiedenste Versuche unternommen einen Ersatz für dieses Salz zu finden. Beispielsweise werden in WO 88/03331 Salze cyclischer Perfluoralkanbis(sulfonyl)imide, u. a. auch deren Lithium-Salze, beschrieben, die als Leitsalze in nichtwäßrigen Elektrolyten für Lithium-Sekundärbatterien eingesetzt werden können. Wie Versuche ergeben haben, lassen sich solche Verbindungen jedoch nur unter großem Aufwand herstellen und müssen nach der Synthese von unerwünschten Nebenprodukten befreit werden. Die Aufreinigung der Salze ist unerläßlich, da für die Anwendung als Bestandteil von Batterieelektrolyten reproduzierbare Eigenschaften unerläßlich sind.

Aufgabe der Erfindung ist es daher, geeignete Leitsalze für Elektrolyte zur Verwendung in Lithiumbatterien zur Verfügung zu stellen. Aufgabe der Erfindung ist es auch ein Verfahren zur Verfügung zu stellen, wodurch in einfacher und preiswerter Weise die erfindungsgemäßen Leitsalze hergestellt werden können.

Die erfindungsgemäße Aufgabe wird gelöst durch neue Lithiumfluorphosphate der allgemeinen Formel

Li⁺[PFₐ(CH_{b}F_{c}(CF₃)_{d})ₑ]⁻, (I)

worin
- a: 1, 2, 3, 4 oder 5,
- b: 0 oder 1
- c: 0, 1, 2 oder 3,
- d: 0, 1, 2 oder 3 und
- e: 1, 2, 3 oder 4
bedeuten, mit der Bedingung, daß die Summe a + e gleich 6, die Summe b + c + d gleich 3 ist und b und c nicht gleichzeitig 0 bedeuten, und mit der Bedingung, daß die Liganden (CH_{b}F_{c}(CF₃)_{d}) unterschiedlich sein können,
die das in Lithium-Sekundärbatterien üblicherweise als Leitsalz verwendete Lithiumhexafluorphosphat ersetzen können, aber auch im Gemisch mit diesen eingesetzt werden können.

Gegenstand der Erfindung sind daher sowohl die neuen erfindungsgemäßen Salze der Formel (I) als auch ein Verfahren zu ihrer Herstellung. Verbindungen der allgemeinen Formel (Ia),

[PFₐ(CH_{b}F_{c}(CF₃)_{d})ₑ] (Ia),

worin, wie in Formel (I)
- b: 0 oder 1
- c: 0, 1, 2 oder 3,
- d: 0, 1, 2 oder 3 und
- e: 1 , 2, 3 oder 4,
jedoch
- a: 1, 2, 3 oder 4
bedeuten, werden als Zwischenprodukte zur Herstellung der Salze gemäß der allgemeinen Formel (I) benötigt.

Gegenstand der Erfindung sind schließlich auch Elektrolyte, die die erfindungsgemäßen Salze enthalten und elektrochemische Zellen, hergestellt unter Verwendung dieser Elektrolyte. Solche elektrochemischen Zellen können sowohl primäre als auch sekundäre Batterien sein, die die Lithiumverbindungen gemäß Formel (I) enthalten.

Insbesondere sind die folgenden Lithiumsalze 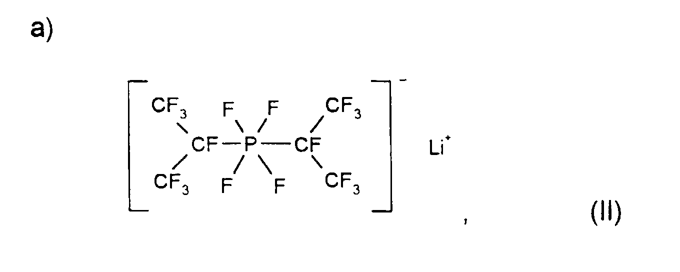 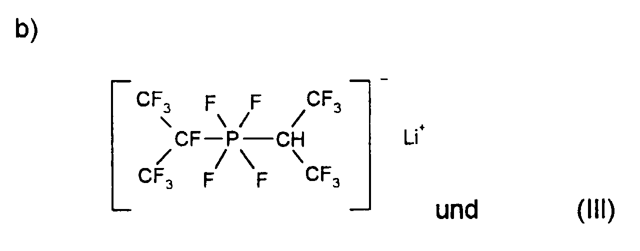 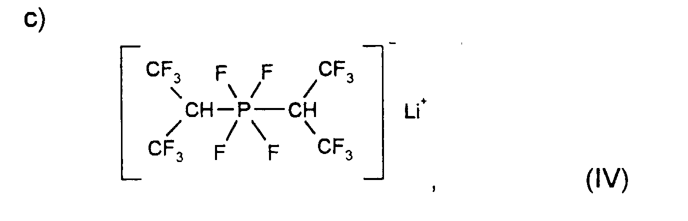 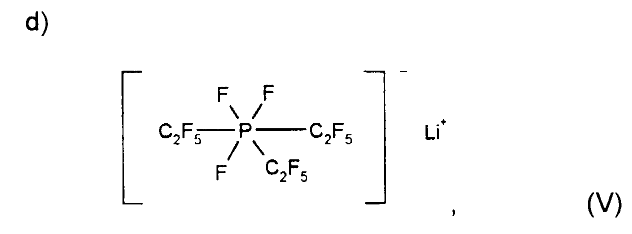 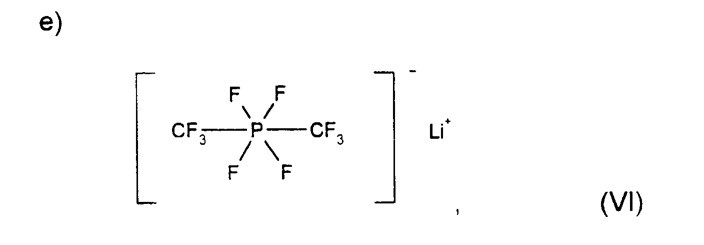 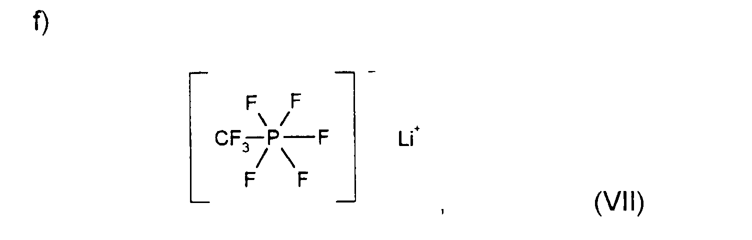 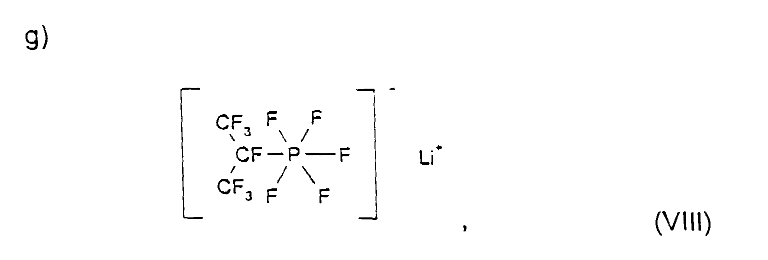 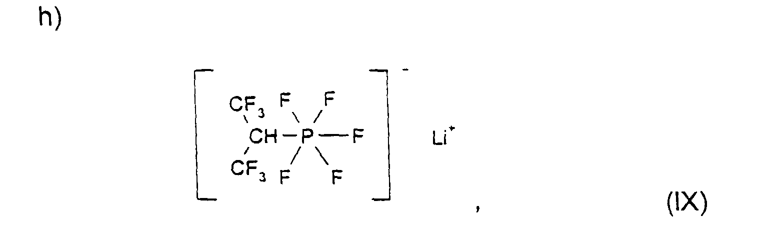 deren Verwendung als Leitsalze in Elektrolyten, Elektrolyte, die diese enthalten, sowie Lithiumbatterien, in denen diese Verbindungen als Leitsalze enthalten sind, Gegenstand der Erfindung.

Zur Herstellung der erfindungsgemäßen Salze werden in einer ersten Stufe geeignete Monochlor- oder Fluor-, Dichlor- oder Difluor-, Chlorfluoralkylphosphane, Chlor-mono-, Chlor-di-, Chlor-tri- oder Chlor-tetraalkylphosphorane, Fluor-mono-, Fluor-di-, Fluor-tri- oder Fluortetraalkylphosphorane oder Trifluor-monohydro-alkylphosphorane in einem inerten Lösungsmittel aufgenommen und in bekannter Weise elektrochemisch bei einer Temperatur von -15 bis 20°C unter Normaldruck fluoriert. Als Lösungsmittel für diese Reaktion ist Fluorwasserstoff geeignet. Die Fluorierungsreaktion wird abgebrochen, wenn 90 bis 150 %, insbesondere 110 bis 130 %, der theoretischen Elektrizitätsmenge aufgenommen worden sind. Dieses wird festgestellt durch coulombmetrische Messung.

Je nach Dauer der Reaktion werden Produktgemische erhalten, in denen sowohl mit Fluor völlig abgesättigte Verbindungen enthalten sind als auch solche, die partiell fluoriert sind. Beispielsweise werden bei der Fluorierung von Chlor-diisopropylphosphan die folgenden Produkte erhalten:

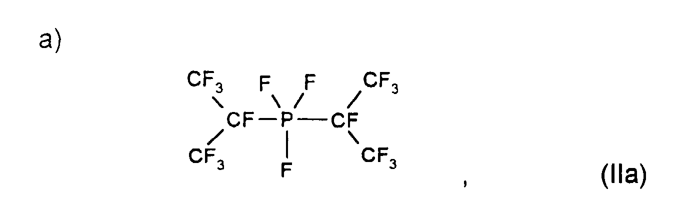

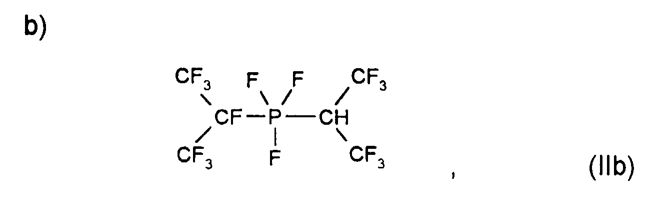

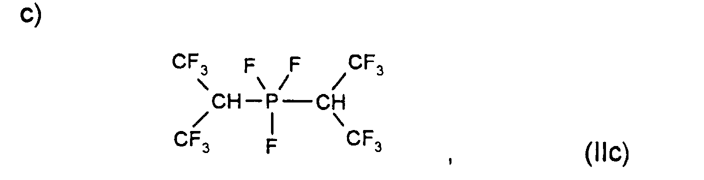

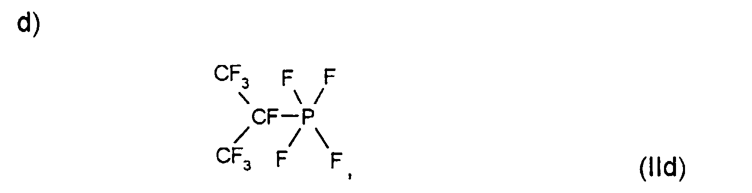

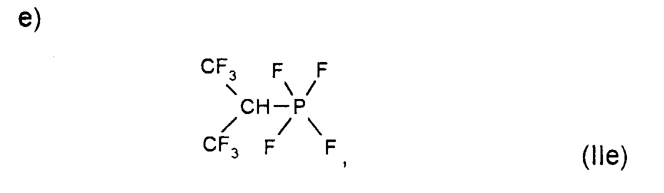

Die eigentlichen erfindungsgemäßen Salze der Formel (I) werden erhalten, indem die in der ersten Stufe erhaltenen fluorierten Alkylphosphorane (II) als Produktgemisch, vorzugsweise nach destillativer Auftrennung unter wasserfreien Bedingungen, in einem geeigneten aprotischen, polaren Lösungsmittel, wie z. B. Diethylether, Dimethoxyethane oder deren Gemische , aufgenommen werden und mit Lithiumfluorid, je nach Reaktivität, bei einer Temperatur von -35 bis 60 °C, vorzugsweise unter Beibehaltung von Raumtemperatur, zu Verbindungen der Formel (I) umgesetzt werden. In den erfindungsgemäßen Elektrolyten sind sowohl die reinen Verbindungen der Formel (I) als auch die durch die Fluorierungsreaktion erhaltenen Gemische einsetzbar. Vorzugsweise aufgrund der Reproduzierbarkeit der Elektrolyteigenschaften werden die reinen Verbindungen zur Herstellung der Elektrolytlösungen eingesetzt.

Überraschenderweise wurde durch Versuche gefunden, daß Verbindungen der Formel (I) in aprotischen polaren Lösungsmitteln bei Raumtemperatur hydrolysestabil sind, und zwar insbesondere jene, deren Alkylreste völlig durch Fluor abgesättigt sind. Dabei nimmt die Hydrolysestabilität mit der Zahl der Fluor-atome im Molekül zu.

Unter aprotischen, polaren Lösungsmitteln sind solche wie
- Nitrile Acetonitril oder Benzonitril,
- Ether Diethylether, Dimethoxyethan, Tetrahydrofuran, Dioxan oder Dimethyltetrahydrofuran,
- Ester Methyl- oder Ethylester der Ameisensäure, der Essigsäure, der Propionsäure, aber auch cyclische Ester, wie Butyrolacton, und organische Carbonate, wie z. B. Dimethylcarbonat, Diethylcarbonat, Ethylmethylcarbonat, Ethylencarbonat, oder Propylencarbonat,
- Amide Dimethylformamid, Diethylformamid, N-Methylpyrolidin oder
- Sulfone Dimethylsulfon, Tetramethylensulfon oder andere Sulfolane
zu verstehen.

Die erfindungsgemäßen Salze weisen außerdem in diesen Lösungsmitteln eine hervorragende Löslichkeit auf, und insbesondere die durch Fluor völlig abgesättigten Verbindungen sind wenig hygroskopisch.

Versuche haben gezeigt, daß diese Verbindungen außerordentlich stabil sind. Bei trockener Lagerung im festen Zustand weisen perfluorierte Verbindungen bei Temperatur unterhalb von 100 °C keine Zersetzung auf. Auch bei weiterer Temperaturerhöhung erweisen sie sich als thermisch stabil. Erst bei Temperaturen oberhalb von 130 °C zeigen sich leichte Verfärbungen.

Auch bei Lagerung in Lösung, z. B. in Dimethoxyethan, sind selbst nach Wochen keine Farbveränderungen feststellbar oder Zersetzungsprodukte nachzuweisen.

Aus diesem Grund eignen sich die erfindungsgemäßen Verbindungen, insbesondere die Verbindungen der Formeln III, IV, V, VI und VII, bereits vorzüglich als Leitsalze in nichtwäßrigen Elektrolyten für Lithiumbatterien.

Weiterhin weisen Elektrolytlösungen, die diese Verbindungen enthalten, bemerkenswerte chemische und elektrochemische Stabilitäten auf. Insbesondere kann eine Oxidation des korrespondierenden Anions vor der Lithiumabscheidung nicht nachgewiesen werden.

Derartige Elektrolyte enthalten neben Lithium-organischen Salzen, wie es die erfindungsgemäßen Verbindungen der Formel (I) sind, ein oder mehrere nichtwäßrige, organische Lösungsmittel und gegebenenfalls weitere Zusatzstoffe. Nach Wunsch können neben den erfindungsgemäßen Verbindungen auch bereits bekannte Lithiumsalze als Leitsalze dem Elektrolyten zugesetzt sein. Nähere Einzelheiten zu derartigen Elektrolyten und dem Aufbau und der Funktionsweise von Lithiumbatterien sind dem Fachmann auf diesem Technologiegebiet bekannt. Die erfindungsgemäßen Verbindungen können in völliger Analogie zu für diese Anwendung bekannten Lithiumverbindungen eingesetzt werden und zeigen hierbei außergewöhnlich hohe Stabilitäten. Entsprechende Batteriezellen zeigen vorzügliche Eigenschaften bezüglich Kapazität und Spannungskonstanz, sowie eine uneingeschränkte Funktionsfähigkeit über eine überdurchschnittlich hohe Zahl an Lade-Entlade-Zyklen hinweg.

Die im folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1

### Bis-(heptafluor-i-propyl)-trifluorphosphoran (IIa) sowie dessen Derivate

Nach dem Simons-Prozess wird Di-i-Propylchlorphosphan elektrochemisch in einer elektrochemischen Zelle, die Fluorwasserstoff als Lösungsmittel enthält, fluoriert. Die verwendete zylindrische Zelle mit einem Volumen von 310 cm³, ausgestattet mit Nickel-Anoden einer effektiven Fläche von S = 3,75 dm², und Kathoden der gleichen effektiven Fläche. Weiterhin ist die Zelle mit einem Kühlkondensator ausgestatt. Die Zelltemperatur wird während der Elektrolyse bei -5°C gehalten und die des Kondensators bei -30 °C.

57 g Di-i-Propylchlorphosphan, gelöst in 200 g Fluorwasserstoffsäure, werden portionsweise zu 235 g zuvor elektrolysierter Fluorwasserstoffsäure gegeben, und zwar in folgender Weise:

| Elektrolysedauer [A h] | Menge Di-i-Propylchlorphosphan [g] |
|---|---|
| 0 | 10 |
| 78,1 | 10 |
| 157,4 | 10 |
| 230,6 | 10 |
| 294,0 | 10 |
| 365,2 | 7 |

Gasförmige Produkte, die den Kühlkondensator und zwei PTFE-Fallen passiert haben, werden auf -78 °C gekühlt.

Die Elektrolyse, die bei einer Spannung von 4,4 - 5,4 V und einer Flußdichte von 0,30 - 0,53 A/dm² durchgeführt wird, ist beendet nach 220 g flüssiges Produkt aus der Zelle aufgefangen werden. Nachdem die Temperatur auf -20 °C eingestellt worden ist und die untere Phase von der Fluorwasserstoff-Phase abgetrennt worden ist, werden 18 g Rohprodukt erhalten. NMR ¹⁹F-spektroskopisch lassen sich darin 75 % Bis-(heptafluorisopropyl)-trifluorphosphoran (lla), 15 % Heptafluor-i-propyl-(1,1,1,3,3,3-hexafluor-i-propyl)-trifluorphosphoran (IIb) und Bis-(1,1,1,3,3,3-hexafluor-i-propyl)-trifluorphosphoran (llc) nachweisen.

Durch fraktionierte Destillation kann dieses Gemisch aufgetrennt werden in Fraktionen, die jeweils eine dieser Verbindungen als Hauptkomponente enthält. Außerdem werden nach der Abtrennung von der Fluorwasserstoff-Phase 33 g bei niedrigen Temperaturen flüssige Produkte aus den Kühlfallen erhalten. NMR ¹⁹F-spektroskopische Untersuchungen zeigen, daß es sich hierbei vorwiegend um Heptafluor-i-propyl-tetrafluorphosphoran (lld), 1,1,1,3,3,3-hexafluor-i-propyl-tetrafluorphosphoran (IIe) und Perfluorpropan handelt. Durch Erhitzen auf 20 °C läßt sich das Perfluorpropan abdestillieren. Der Rückstand läßt sich durch fraktionierte Destillation auftrennen in Fraktionen, die Heptafluor-i-propyl-tetrafluorphosphoran (IId) oder 1,1,1,3,3,3-Hexafluorisopropyltetrafluorphosphorane (IIe) als Hauptkomponenten enthalten.

Die erhaltenen Verbindungen lassen sich durch folgende Daten charakterisieren:

Bis-(heptafluorisopropyl)-trifluorphosphoran (lla): 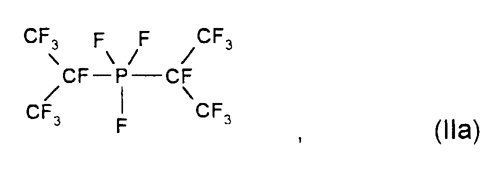
- NMR ¹⁹F, ppm:: (CD₃CN-Film mit CCl₃F als Standard)
-39,72 dtm (3 F¹)
-70,15 m (12 F³)
-171,78 dm (2 F²)
J³_{F¹F²}= 8,0 Hz
- NMR ³¹P, ppm:: (CD₃CN-Film mit 85% H₃PO₄ als Standard)
-26,0 qtm
J¹_{P,F¹} = 1083 Hz
J²_{P,F²} = 102 Hz
J³_{P,F³} = 4,9 Hz

Heptafluor-i-propyl-(1,1,1,3,3,3-hexafluor-i-propyl)-trifluorphosphoran (llb): 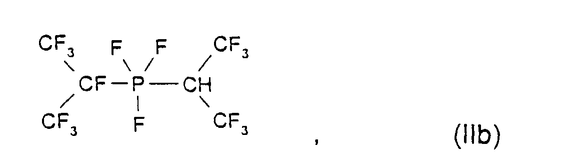
- NMR ¹⁹F, ppm:: (CD₃CN-Film mit 85% CCl₃F als Standard)
- 33,10 dm (3 F¹)
-59,56 m (6 F⁴)
-70,26 m (6 F³)
-171,90 m (1F²)
- NMR ³¹P, ppm:: (CD₃CN-Film mit 85% H₃PO₄ als Standard)
-23,2 qdm
J¹_{P,F¹} = 1014,0 Hz
J²_{P,F²} = 99,0 Hz
J³_{P,F³} = 5,2 Hz
J³_{P,F⁴} = 5,7 Hz
J² _{P,H} = 11,0 Hz
- NMR 'H, ppm:: (CD₃CN-Film mit TMS als Standard)
3,9 dm

Bis-(hexa-1,1,1,3,3,3-hexafluor-i-propyl)-trifluorphosphoran (llc): 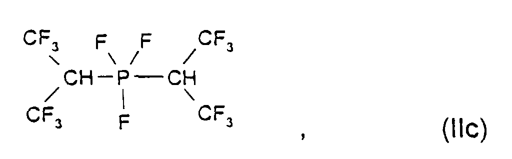
- NMR ¹⁹F, ppm:: (CD₃CN-Film mit CCl₃F als Standard)
-25,96 dm (3 F¹)
-59,51 m (12 F²)
- NMR ³¹P, ppm:: (CD₃CN-Film mit 85% H₃PO₄ als Standard)
-20,69 qm
J¹_{P,F¹} = 960,0 Hz
J³_{P,F²} = 11,3 Hz
- NMR 'H, ppm:: (CD₃CN-Film mit TMS als Standard)
3,9 dm

Heptafluor-i-propyl-tetrafluorphosphoran (lld): 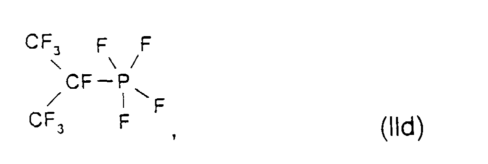
- NMR ¹⁹F, ppm: ((CD₃CN-Film mit CCL₃F als Standard); -30 °C):
-50,10 dm (4 F¹)
-72,22 m (6 F³)
-172,83 dm (1F²)
- NMR ³¹P, ppm: (CD₃COCD₃-film mit 85% H₃PO₄ als Standard); -40 °C):
-55,3 pdsep
J¹_{P,F¹} = 1042,0 Hz
J²_{P,F²} = 100,0 Hz
J³_{P,F³} = 6,0 Hz

1,1,1,3,3,3-Hexafluor-i-propyl-tetrafluorphosphorane (IIe): 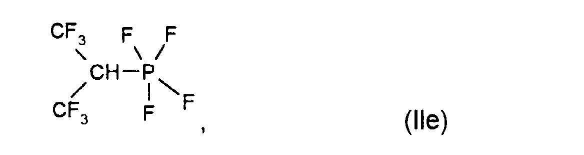
- NMR ¹⁹F, ppm: (CD₃CN-film mit CCl₃F als Standard); -30 °C):
-40,90 dm (4 F¹)
-61,8 m (6 F²)
- NMR ³¹P, ppm: (CD₃COCD₃-film mit 85% H₃PO₄ als Standard -40 °C):
-50,8 pdsep
J¹_{P,F¹} = 1003,0 Hz
J³_{P,F²} = 14,0 Hz
J²_{P,H} = 27,0 Hz

### Beispiel 2

### Tris-(pentafluorethyl)-difluorphosphoran (Va)

Analog zu der Durchführung beschrieben in Beispiel 1 werden aus 69 g Triethylphosphinoxid 70 g Tris-(pentafluorethyl)-difluorphosphoran (Va) hergestellt. NMR ³¹P-spektroskopische Daten entsprechen denen in der Literatur (V.J. Semenii et. Al.; Zh. Obshch. Khim. (Russ.) 1985, Vol. 55, 12, 2716-2720): 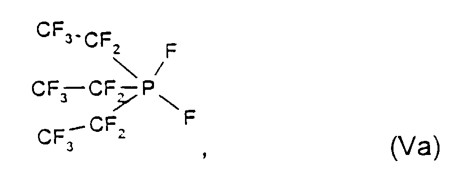
- NMR ³¹P,: (CD₃COCD₃-film mit 85%-ige H₃PO₄ als Standard), ppm:
-47,55 tsep
J¹_{P,F} = 1003,0 Hz
J²_{P,F} = 122,0 Hz

### Beispiel 3

### Lithium Bis-(heptafluor-1-propyl)-tetrafluorphosphat (II)

Zu einer in einem aus PTFE bestehenden Reaktionsgefäß vorgelegten Lösung, bestehend aus 0,82 g (0,031 mol) LiF und 60 ml vorgetrocknetem Dimethoxyethan, werden unter Feuchtigkeitsausschluß langsam 12 g (0,028 mol) Bis-(heptafluor-i-propyl)-trifluorphosphoran (lla) unter Rühren mit einem Magnetrührer hinzugegeben, wobei die Temperatur durch Kühlung in einen Eiswasserbad auf Raumtemperatur gehalten wird. Anschließend wird bei gleicher Temperatur für eine Stunde nachgerührt und noch geringe Mengen metallischen Lithiums hinzugefügt. Die Reaktionsmischung wird für 24 bei Raumtemperatur gehalten, anschließend filtriert und kann direkt als Elektrolyt für wiederaufladbare Batterien verwendet werden. Das während der Reaktion gebildete Lithium bis-(heptafluor-i-propyl)-tetrafluorphosphat (II) kann jedoch auch isoliert werden, indem das Lösungsmittel unter Hochvakuum abdestilliert wird. Isoliert wird ein Lithium-Komplexsalz (II), Li⁺[(i-C₃F₇)₂PF₄]⁻ x 2 DME, Smp.: 126 - 128°C; thermisch stabil bis 130 °C.

| Analyse: Li | |
|---|---|
| theoretisch | 0,93 % |
| gefunden | 1,15% |

Das Lösungsmittel kann entfernt werden, indem das Komplexsalz (II) für mehrere Tage im Hochvakuum auf eine Temperatur von 80 °C erwärmt wird.

### Beispiel 3a

Zur Herstellung von erfindungsgemäßen Lithiumsalzen kann die in Beispiel 1 erhaltene Fluorphosphoranmischung direkt ohne vorherige fraktionierte Destillation verwendet werden.

16 g einer Fluorphosphoranmischung aus Beispiel 1, die 75 % der Verbindung (IIa), 15 % der Verbindung (llb) und 10 % der Verbindung (llc) enthält, wurde, wie oben beschrieben, zu einer Lösung , bestehend aus 1,0 g LiF und 80 ml trockenem DME, gegeben. Auch diese Lösung kann nach dem Filtrieren direkt als Elektrolyt eingesetzt werden. Die Li-Salze können aber auch aus der Lösung auskristallisiert werden, indem vorgetrocknetes Hexan zu der DME-Lösung gegeben wird. Durch Umkristallisieren des erhaltenen Produkts mit einem Lösungsmittelgemisch bestehend aus getrocknetem DME und Dibutylether (1 : 2) werden 13,6 g Lithium Bis-(heptafluor-i-propyl)-tetrafluorphosphat (II) zusammen mit 6% Lithium-heptafluorisopropyl(1,1,1,3,3,3-hexafluor-i-propyl)-tetrafluorphosphat (IV) erhalten.

Die Struktur der Salze (II) und (III) wurde nachgewiesen durch NMR ¹⁹F- und ³¹P-Spektroskopie. NMR-Spektren wurden in CD₃COCD₃-Lösungen mit CCl₃F und im anderen Fall 85 %-iger H₃PO₄ als externe Standards gemessen.

Lithium Bis-(heptafluor-i-propyl)-tetrafluorphosphat (II)
- NMR ¹⁹F, ppm:: -58,14 dm (4 F¹)
-71,07 pdd (12 F³)
-184,40 dpsep (2 F²)
J³_{F¹,F²} = 4,0 Hz
J⁴ _{F¹,F³} = 10,9 Hz
J³ _{F²,F³} = 4,7 Hz
- NMR ³¹P, ppm:: -149,27 ptm
- 148,42 ptm (CD₃CN-Lösung)
J¹_{P,F¹} = 943,0 Hz
J²_{P,F²} = 75,0 Hz
J³_{P,F³} = 8,2 Hz

Lithium-heptafluorisopropyl(1,1,1 ,3,3,3-hexafluor-i-propyl)-tetrafluorphosphat (III)
- NMR ¹⁹F, ppm:: 47,20 dddm (4 F¹)
-58,01 dpd (6 F⁴)
-70,79 pdd (6 F³)
-183,50 dm (1F²)
J³_{F¹,F²} = 4,1 Hz
J³_{H,F¹} = 4,1 Hz
J³_{F²,F³} = 8,0 Hz
J⁴_{F¹,F³} = 11,5 Hz
J⁴_{F¹,F⁴} = 11,5 Hz
- NMR ³¹P, ppm:: -147,37 pdm
J¹_{P,F¹} = 928,0 Hz
J²_{P,F²} = 74,5 Hz
J³_{P,F³} = 8,3 Hz
J³_{P,F⁴} = 11,4 Hz

### Beispiel 4

### Lithium (heptafluor-i-propyl-pentafluorphosphat) (VIII)

Lithium (heptafluor-i-propyl-pentafluorphosphat) (VIII) wird in analoger Weise erhalten, wie in Beispiel 3 beschrieben, durch Reaktion von Fluorphosphoran (IId) mit LiF in trockenem Dimethoxyethan. Wie beschrieben, kann die nach dem Filtrieren erhaltene Lösung direkt als Elektrolytlösung eingesetzt werden oder das obengenannte Salz isoliert werden, indem das Lösungsmittel unter Hochvakuum abdestilliert wird oder durch Auskristallisation, hervorgerufen durch Zugabe von Hexan.

Die Mischung der Fluorphosphorane, erhalten nach Beispiel 1, kann ebenfalls zur Herstellung von Elektrolytlösungen verwendet werden, indem man sie mit LiF ohne vorherige Reinigung umsetzt. Die Lösung der beiden Lithiumsalze (VIII) und (IX), die in diesem Fall erhalten wird, kann ebenso als Elektrolyt für Lithiumbatterien verwendet werden.

Beide Salze können in gleicher Weise, wie oben beschrieben, isoliert werden.

Lithium-heptafluor-i-propyl-pentafluorphosphat (VIII)
- NMR ¹⁹F, ppm:: (Lösungsmittel: CD₃COCD₃; Standard: CCl₃F)
-62,62 dddsep (4 F¹)
-73,13 p (1F²)
-71,49 pdd (6 F⁴)
-183,72 dpsepm (1F³)
J²_{F¹,F²} = 45,4 Hz
J³_{F¹,F³} = 3,6 Hz
J³ _{F³,F⁴} = 4,2 Hz
J⁴_{F¹,F⁴} = 11,4Hz
- NMR ³¹P, ppm:: (Lösungsmittel: CD₃CN; externer Standard: 85 % H₃PO₄)
-148,16 pddsep
J¹_{P,F¹} = 841,0 Hz
J¹_{P,F²} = 717,0 Hz
J²_{P,F³} = 68,7 Hz
J³_{P,F⁴} = 4,9 Hz

Lithium-1,1,1,3,3,3-hexafluor-i-propyl-pentafluorphosphat (IX)
- NMR ¹⁹F, ppm:: (Lösungsmittel: CD₃COCD₃; Standard: CCl₃F)
-52,95 dddsep (4 F¹)
-69,04 p (1 F²)
-59,40 dp (6 F³)
J²_{F¹,F²} = 42,6 Hz
J³_{F¹,H} = 3,8 Hz
J⁴_{F¹,F³} = 12,3 Hz
- NMR ³¹P, ppm:: (Lösungsmittel: CD₃CN; externer Standard: 85 % H₃PO₄)
-145,82 pddsep
J¹_{P,F¹} = 829,0 Hz
J¹_{P,F²} = 708,0 Hz
J²_{P,H} = 29,0 Hz
J³_{P,F³} = 12,9 Hz

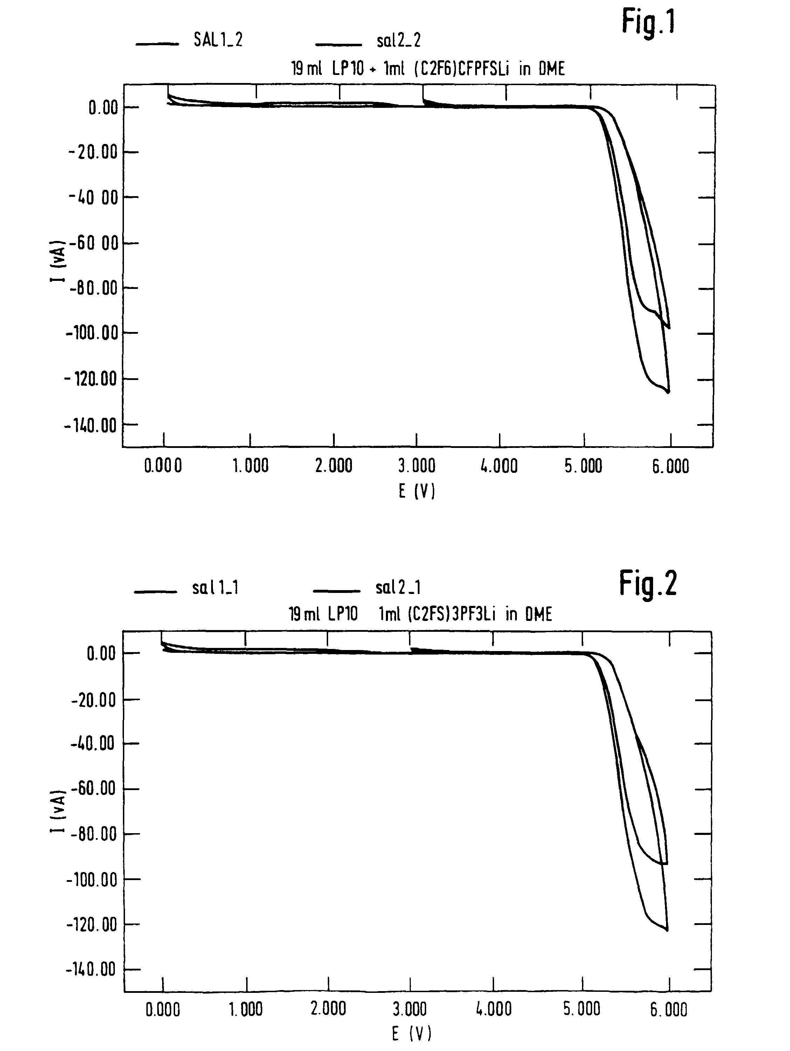

Unter Verwendung von Lithium-heptafluor-propyl-pentafluorphosphat (VIII) wurden Cyclisierungsversuche durchgeführt, wodurch die in Fig. 1 dargestellten Ergebnisse erzielt wurden. Durchgeführt wurden diese Versuche unter folgenden Bedingungen:

| | |
|---|---|
| Potentialintervall | 0,0 - 3,0 V; 3,0 - 6,0 V |
| | |
| Änderungsrate | 100 mV/s |
| | |
| Arbeitselektrode | Pt, Oberfläche 1,96E-3 cm^2 |
| | |
| Referenzelektrode | Li |
| | |
| Meßelektrode | Li |
| | |
| Elektrochemische Stabilität | bis zu 5,0 V |

### Beispiel 5

### Lithium Tris-(pentafluorethyl)-trifluorphosphat (V)

Lithium-tris-(pentafluorethyl)-trifluorphosphat (V) wird ananlog Beispiel 3 erhalten durch Reaktion des entsprechenden analog Beispiel 2 erhaltenen Fluorphosphorans (Va) mit LiF in vorgetrocknetem Dimethoxyethan. Auch in diesem Fall kann die nach der Reaktion und dem Filtrieren erhaltene Reaktionslösung direkt als Elektrolyt verwendet werden oder das Salz (V) durch Abdestillieren des Lösungsmittels unter Hochvakuum oder durch Auskristallisieren, hervorgerufen durch Zugabe von Hexan isoliert werden.

Lithium-tris-pentafluorethyl)-trifluorphosphat (V)
- NMR ¹⁹F, ppm:: (Lösungsmittel: CD₃COCD₃; Standard: CCl₃F)
-87,0 d (2 F¹)
-43,6 dm (1 F²)
-115,3 m (4 F³)
-115,7 m (2 F⁵)
-79,7 m (3 F⁶)
-81,3 m (6 F⁴)
- NMR ³¹P, ppm:: (Lösungsmittel: CD₃COCD₃; externer Standard: 85 % H₃PO₄)
-149,8 tdpt
J¹_{P,F¹} = 902,0 Hz
J¹_{P,F²} = 889,0 Hz
J²_{P,F³} = 98,0 Hz
J²_{P,F⁵} = 83,0 Hz

Lithium-tris-(pentafluorethyl)-trifluorphosphat-Komplex mit DME (V) besitzt einen Smp. von 116 -118 °C und ist thermisch stabil bis 130 °C **Fig. 2**:Unter Verwendung von 1 ml Lithium-tris-pentafluorethyl)trifluorphosphat(V) gelöst in DME, unter Zusatz von 19 ml LP10, wurden Cyclisierungsversuche durchgeführt. Ergebnisse des ersten und des fünften Cyclisierungsversuchs sind in Fig.2 dargestellt. Durchgeführt wurden diese Versuche unter folgenden Bedingungen:

| | |
|---|---|
| Potentialintervall | 0,0 - 3,0 V: 3,0 - 6,0 V |
| Änderungsrate | 100 mV/s |
| Arbeitselektrode | Pt, Oberfläche 1,96 E⁻³ cm² |
| Referenzelektrode | Li |
| Meßelektrode | Li |
| Elektrochemische Stabilität | bis zu 5V |

## Patentansprüche

1. Verfahren zur Herstellung von Lithiumfluorphosphaten der allgemeinen Formel
Li⁺[PFₐ(CH_{b}f_{c}(CF₃)_{d})ₑ]⁻, (I)
worin
a 1, 2, 3, 4 oder 5,
b 0 oder 1
c 0, 1, 2 oder 3,
d 0, 1, 2 oder 3 und
e 1, 2, 3 oder 4
bedeuten, mit der Bedingung, daß die Summe a + e gleich 6, die Summe b + c + d gleich 3 ist und b und c nicht gleichzeitig 0 bedeuten, unter der Voraussetzung daß die Liganden (CH_{b}F_{c}(CF₃)_{d}) unterschiedlich sein können, dadurch gekennzeichnet, daß
a) Monochlor- oder Fluor-, Dichlor- oder Difluor-, Chlorfluoralkylphosphane, Chlor-mono-, Chlor-di-, Chlor-tri- oder Chlor-tetraalkylphosphorane, Fluor-mono-, Fluor-di-, Fluor-tri- oder Fluortetraalkylphosphorane oder Trifluor-monohydro-alkyl-phosphorane in einem inerten Lösungsmittel elektrochemisch fluoriert werden,
b) das erhaltene Produktgemisch gegebenenfalls destillativ in die verschiedenen Fluorierungsprodukte aufgetrennt wird und
c) die fluorierten Alkylphosphane in einem aprotischen, polaren Lösungsmittel bei einer Temperatur von - 35 °C bis 60 °C mit Lithiumfluorid umgesetzt werden.

2. Verfahren gemäß Anspruch 1, dadurch gekennzeichnet, daß die Fluorierung bei -20 °C bis Raumtemperatur und Normaldruck durchgeführt wird.

3. Verfahren gemäß Anspruch 1, dadurch gekennzeichnet, daß die destillative Aufreinigung der Fluorierunsprodukte unter Inertgasatmosphäre erfolgt.

4. Verfahren gemäß Anspruch 1, dadurch gekennzeichnet, daß die Umsetzung mit Lithiumfluorid bei Raumtemperatur erfolgt.

5. Verwendung von Verbindungen der allgemeinen Formel
[PFₐ(CH_{b}F_{c}(CF₃)_{d})ₑ] (Ia),
worin, wie in Formel (I)
a 1, 2, 3, 4 oder 5,
b 0 oder 1
c 0, 1, 2 oder 3,
d 0, 1, 2 oder 3 und
e 1, 2, 3 oder 4
bedeuten, mit der Bedingung, daß die Summe a + e gleich 6, die Summe b + c + d gleich 3 ist und b und c nicht gleichzeitig 0 bedeuten, unter der Voraussetzung daß die Liganden (CH_{b}F_{c}(CF₃)_{d}) unterschiedlich sein können,
als Zwischenprodukte zur Herstellung von Verbindungen der Formel (I) gemäß Anspruch 1.

6. Lithiumfluorphosphate der allgemeinen Formel
Li⁺[PFₐ(CH_{b}F_{c}(CF₃)_{d})ₑ]⁻, (I)
worin
a 1, 2, 3, 4 oder 5
b 0 oder 1
c 0, 1, 2 oder 3
d 0, 1, 2 oder 3 und
e 1, 2, 3 oder 4
bedeuten, mit der Bedingung, daß die Summe a + e gleich 6, die Summe b + c + d gleich 3 ist und b und c nicht gleichzeitig 0 bedeuten, unter der Voraussetzung, daß die Liganden (CH_{b}F_{c}(CF₃)_{d}) unterschiedlich sein können.

7. Lithiumfluorphosphate gemäß Anspruch 6

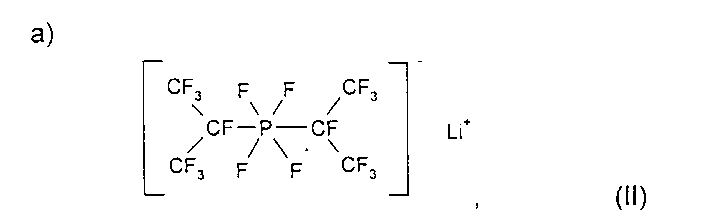

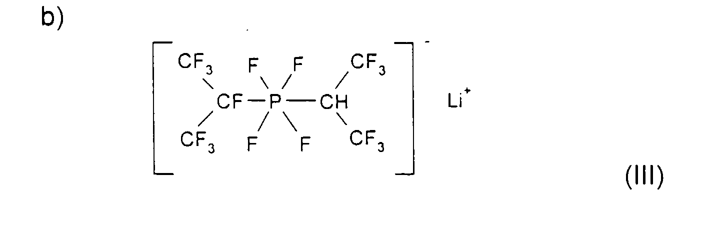

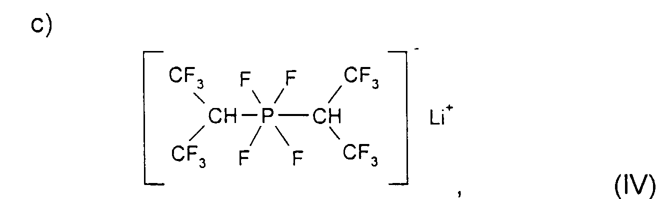

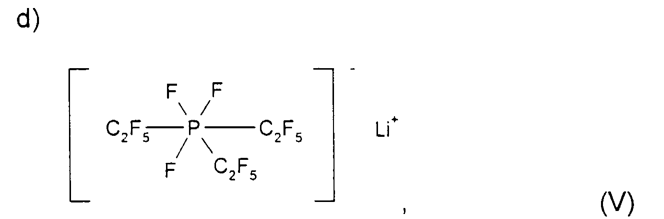

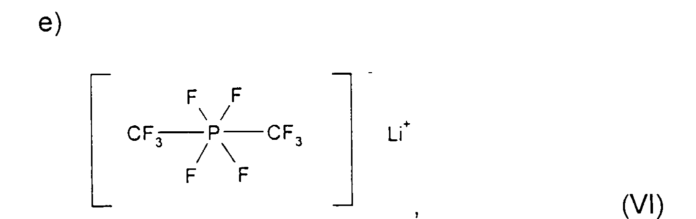

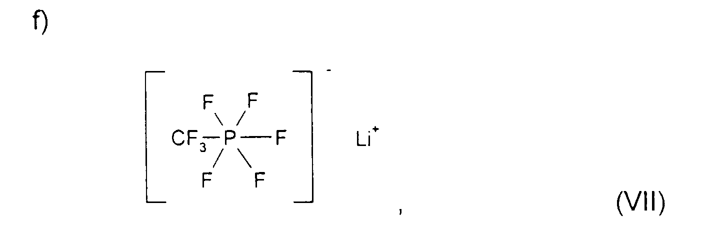

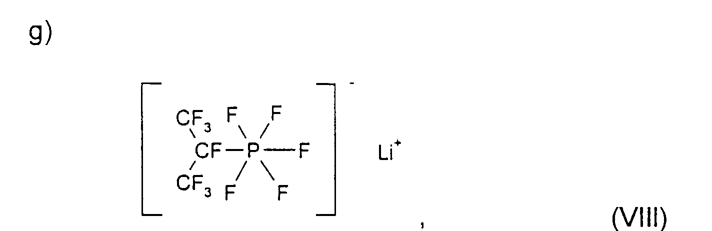

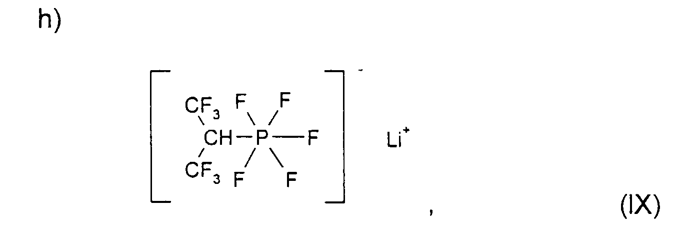

8. Verwendung der Lithiumfluorphosphate gemäß der Ansprüche 6 und 7 als Leitsalze in Lithiumbatterien.

9. Elektrolyte für Lithiumbatterien, enthaltend Lithiumfluorphosphate der allgemeinen Formel (I) gemäß der Ansprüche 6 und 7.

10. Sekundäre Lithiumbatterien enthaltend Elektrolyte gemäß Anspruche 9.

11. Elektrolyte für elektrochemische Zellen, enthaltend Lithiumfluorphosphate gemäß der Ansprüche 6 und 7.

12. Elektrochemische Zellen enthaltend Elektrolyte gemäß Anspruch 11.

## Claims

1. Process for producing lithium fluorophosphates of the general formula
Li⁺[PFₐ(CH_{b}F_{c}(CF₃)_{d})ₑ]⁻, (I)
wherein
a is 1, 2, 3, 4 or 5,
b is 0 or 1,
c is 0, 1, 2 or 3,
d is 0, 1, 2 or 3 and
e is 1, 2, 3 or 4,
with the condition that the sum of a + e is equal to 6, the sum of b + c + d is equal to 3 and b and c are not simultaneously 0, with the proviso that the ligands (CH_{b}F_{c}(CF₃)_{d}) may be different, characterized in that
a) monochloro- or fluoro-, dichloro- or difluoro-, chlorofluoroalkylphosphines, chloromono-, chlorodi-, chlorotri- or chlorotetraalkylphosphoranes, fluoromono-, fluorodi-, fluorotrior fluorotetraalkylphosphoranes or trifluoromonohydroalkylphosphoranes are fluorinated electrochemically in an inert solvent,
b) the product mixture obtained is separated into the different fluorination products by distillation if desired and
c) the fluorinated alkylphosphines are reacted with lithium fluoride in an aprotic, polar solvent at a temperature of -35°C to 60°C.

2. Process according to Claim 1, characterized in that the fluorination is performed at -20°C to room temperature and normal pressure.

3. Process according to Claim 1, characterized in that the distillative purification of the fluorination products is carried out under inert gas atmosphere.

4. Process according to Claim 1, characterized in that the reaction with lithium fluoride is carried out at room temperature.

5. Use of compounds of the general formula
[PFₐ(CH_{b}F_{c}(CF₃)_{d})ₑ] (Ia),
wherein, as in formula (I),
a is 1, 2, 3, 4 or 5,
b is 0 or 1,
c is 0, 1, 2 or 3,
d is 0, 1, 2 or 3 and
e is 1, 2, 3 or 4,
with the condition that the sum of a + e is equal to 6, the sum of b + c + d is equal to 3 and b and c are not simultaneously 0, with the proviso that the ligands (CH_{b}F_{c}(CF₃)_{d}) may be different, as intermediates for producing compounds of the formula (I) according to Claim 1.

6. Lithium fluorophosphates of the general formula
Li⁺[PFₐ(CH_{b}F_{c}(CF₃)_{d})ₑ]⁻, (I)
wherein
a is 1, 2, 3, 4 or 5,
b is 0 or 1,
c is 0, 1, 2 or 3,
d is 0, 1, 2 or 3 and
e is 1, 2, 3 or 4,
with the condition that the sum of a + e is equal to 6, the sum of b + c + d is equal to 3 and b and c are not simultaneously 0, with the proviso that the ligands (CH_{b}F_{c}(CF₃)_{d}) may be different.

7. Lithium fluorophosphates according to Claim 6

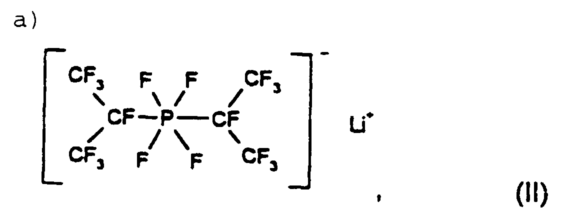

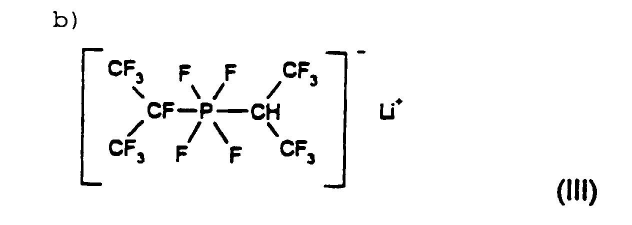

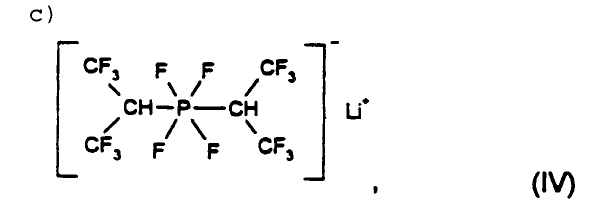

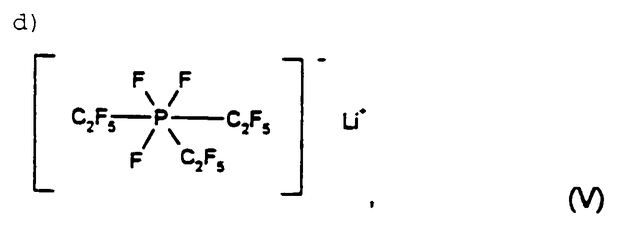

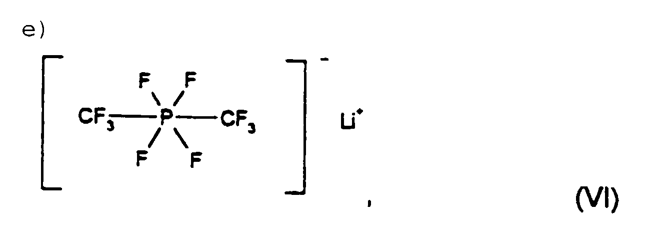

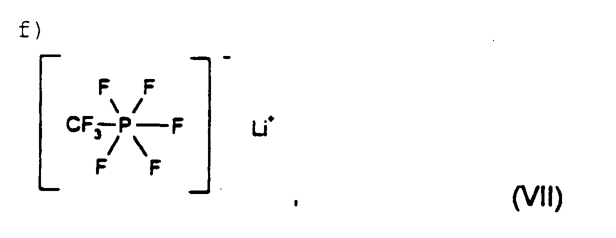

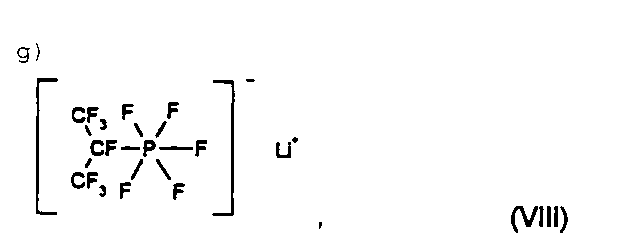

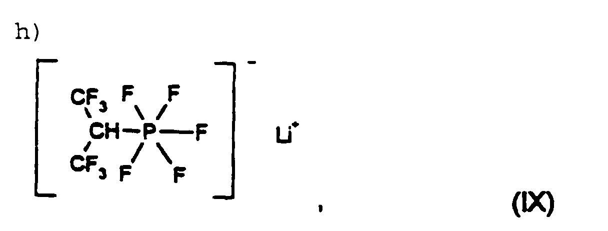

8. Use of the lithium fluorophosphates according to Claims 6 and 7 as conducting salts in lithium batteries.

9. Electrolytes for lithium batteries, comprising lithium fluorophosphates of the general formula (I) according to Claims 6 and 7.

10. Secondary lithium batteries, comprising electrolytes according to Claim 9.

11. Electrolytes for electrochemical cells, comprising lithium fluorophosphates according to Claims 6 and 7.

12. Electrochemical cells comprising electrolytes according to Claim 11.

## Revendications

1. Procédé pour la préparation de fluorophosphates de lithium de formule générale
Li⁺[PFₐ(CH_{b}F_{c}(CF₃)_{d})ₑ]⁻ (I)
dans laquelle
a représente 1, 2, 3, 4 ou 5,
b représente 0 ou 1,
c représente 0, 1, 2 ou 3,
d représente 0, 1, 2 ou 3 et
e représente 1, 2, 3 ou 4,
avec la condition que la somme a + e est égale à 6, la somme b + c + d est égale à 3 et b et c ne représentent pas simultanément 0, et étant entendu que les ligands (CH_{b}F_{c}(CF₃)_{d}) peuvent être différents, caractérisé en ce que
a) on soumet à une fluoration électrochimique des monochloro- ou -fluoro-, dichloro- ou difluoro-, chlorofluoroalkylphosphoranes, chloro-mono-, chloro-di-, chloro-tri-, ou chloro-tétraalkylphosphoranes, fluoro-mono-, fluoro-di-, fluoro-tri-, ou fluorotétraalkylphosphoranes ou trifluoromonohydro-alkylphosphoranes dans un solvant inerte,
b) le mélange de produits obtenu est éventuellement fractionné par distillation en les différents produits de fluoration, et
c) on fait réagir les alkylphosphoranes fluorés avec du fluorure de lithium dans un solvant aprotique polaire, à une température de -35°C à 60°C.

2. Procédé selon la revendication 1, caractérisé en ce que la fluoration est effectuée à une température de -20°C à la température ambiante et sous la pression normale.

3. Procédé selon la revendication 1, caractérisé en ce que la purification par distillation des produits de fluoration s'effectue sous une atmosphère d'un gaz inerte.

4. Procédé selon la revendication 1, caractérisé en ce que la réaction avec le fluorure de lithium s'effectue à la température ambiante.

5. Utilisation de composés de formule générale
[PFₐ(CH_{b}F_{c}(CF₃)_{d})ₑ] (Ia)
dans laquelle, comme dans la formule (I)
a représente 1, 2, 3, 4 ou 5,
b représente 0 ou 1,
c représente 0, 1, 2 ou 3,
d représente 0, 1, 2 ou 3 et
e représente 1, 2, 3 ou 4,
avec la condition que la somme a + e est égale à 6, la somme b + c + d est égale à 3 et b et c ne représentent pas simultanément 0, et étant entendu que les ligands (CH_{b}F_{c}(CF₃)_{d}) peuvent être différents, en tant que produits intermédiaires pour la préparation des composés de formule (I) selon la revendication 1.

6. Fluorophosphates de lithium de formule générale
Li⁺[PFₐ(CH_{b}F_{c}(CF₃)_{d})ₑ]⁻ (I)
dans laquelle
a représente 1, 2, 3, 4 ou 5,
b représente 0 ou 1,
c représente 0, 1, 2 ou 3,
d représente 0, 1, 2 ou 3 et
e représente 1, 2, 3 ou 4,
avec la condition que la somme a + e est égale à 6, la somme b + c + d est égale à 3 et b et c ne représentent pas simultanément 0, et étant entendu que les ligands (CH_{b}F_{c}(CF₃)_{d}) peuvent être différents.

7. Fluorophosphates de lithium selon la revendication 6,

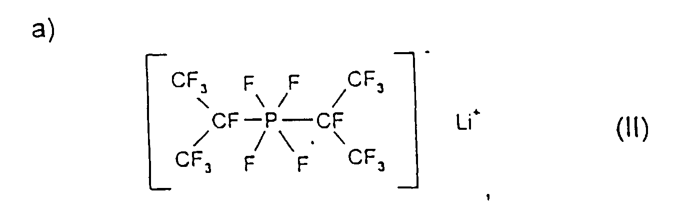

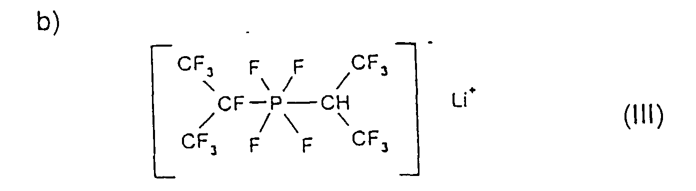

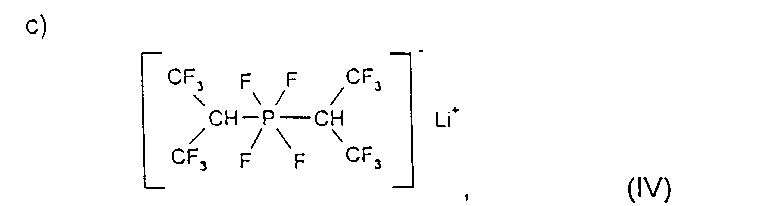

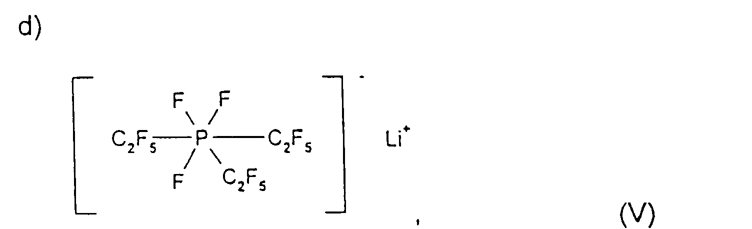

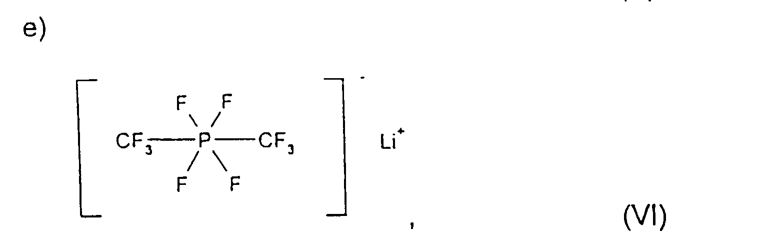

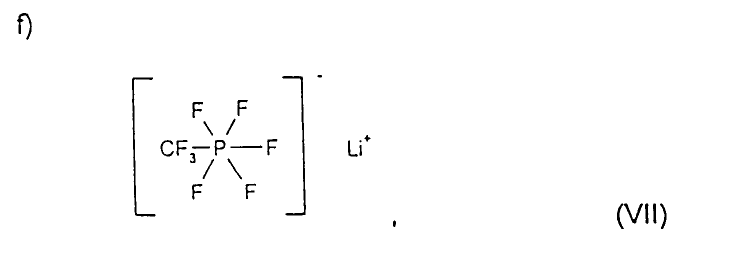

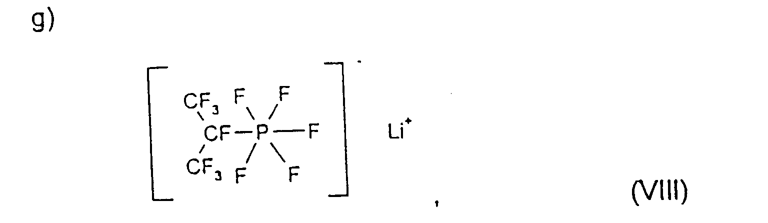

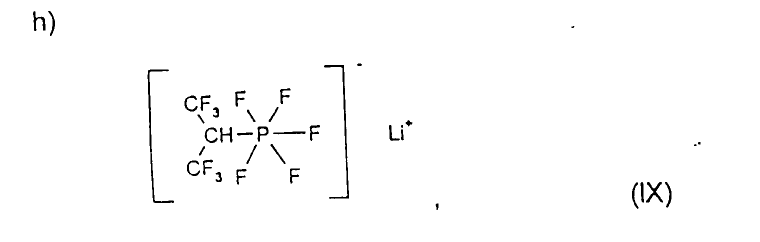

8. Utilisation des fluorophosphates de lithium selon les revendications 6 et 7, en tant que sels conducteurs dans des piles au lithium.

9. Electrolytes pour piles au lithium, contenant des fluorophosphates de lithium de formule générale (I) selon les revendications 6 et 7.

10. Piles au lithium secondaires, contenant des électrolytes selon la revendication 9,

11. Electrolytes pour cellules électrochimiques, contenant des fluorophosphates de lithium selon les revendications 6 et 7.

12. Cellules électrochimiques contenant des électrolytes selon la revendication 11.
